# EUROPÄISCHE PATENTSCHRIFT

(11) **EP 1 962 581 B1**
(45) Veröffentlichungstag und Bekanntmachung des Hinweises auf die Patenterteilung: **31.12.2014**
(21) Anmeldenummer: 06829082.4
(22) Anmeldetag: 21.11.2006
(51) Int. Cl.: A01J 5/08

(54) **Melkbecher, Absaugelement eines Melkbechers und Melkverfahren**
Milking cup, liner of a milking cup and milking method
Gobelet trayeur, manchon de gobelet trayeur et procédé de traite

(30) Priorität: 22.11.2005 DE 102005055973
(43) Veröffentlichungstag der Anmeldung: 03.09.2008
(73) Patentinhaber: GEA Farm Technologies GmbH, 59199 Bönen (DE)
(72) Erfinder: SCHULZE WARTENHORST, Bernhard, 48231 Warendorf (DE); FRENSER, Reinhard, 33378 Rheda-Wiedenbrück (DE)
(74) Vertreter: BSB Intellectual Property Law
(86) Internationale Anmeldenummer: PCT/EP2006/011132
(87) Internationale Veröffentlichungsnummer: WO 2007/059915

(56) Entgegenhaltungen:
- EP-A2- 1 647 183
- DE-A1- 19 840 732
- FR-A- 499 796
- FR-A- 2 413 850
- US-A- 1 365 665
- US-A- 2 612 136
- US-B1- 6 997 136

## Beschreibung

Die vorliegende Erfindung bezieht sich auf eine Vorrichtung und eine Einrichtung, sowie ein Verfahren zum Melken von Tieren. Die Erfindung wird im Folgenden im Zusammenhang auf eine Vorrichtung und ein Verfahren zum Melken von Kühen beschrieben. Es wird jedoch darauf hingewiesen, dass die vorliegende Erfindung auch für Melkvorrichtungen und Melkverfahren zum Melken von Schafen, Ziegen, Büffeln, Kamelen, Dromedaren, Lamas, Eseln, Yaks, Elchen, Pferden und sonstigen milchabgebenden Tieren verwendet werden kann.

Die Erfindung kann beim konventionellen Melken, beim maschinellen Melken und auch beim halbautomatischen Melken eingesetzt werden. Der Einsatz ist auch bei Systemen möglich, bei denen ein halbautomatisches, vollautomatisches, roboterunterstütztes und/oder computergesteuertes Reinigen der Zitzen und/oder Ansetzen der Zitzenbecher an die Zitzen der Tiere erfolgt. Auch eine halb- oder vollautomatische Vor- oder Nachbehandlung der Zitzen durch z.B. ein Dippmittel ist möglich. Das Melken kann viertelindividuell erfolgen oder es kann ein Milchsammelstück vorgesehen sein, in das Melkschläuche ausgehend von den Zitzenbechern münden.

Beim maschinellen Melken wird im Stand der Technik mit dem so genannten Zweiraummelkbecherprinzip gearbeitet. Bei diesem Prinzip ist in eine Melkbecherhülse ein Zitzengummi derart eingebaut, das zwei voneinander getrennte Räume entstehen, nämlich einerseits ein Melkbecher-Innenraum, in dem sich die Zitze befindet, und andererseits ein Melkbecherzwischenraum, der zwischen dem Zitzengummi und der Außenhülse des Melkbechers liegt. Der Melkbecherzwischenraum wird meist Pulsraum und der Melkbecher-Innenraum Zitzenraum genannt.

Wenn beim Melken der Melkbecher an eine Zitze angesetzt wird, so wird ein kontrollierter Unterdruck auf den Melkbecherinnenraum aufgebracht. Auf diese Weise wird das Haften des Melkbechers gesichert. Außerdem wird Milch durch den entstehenden Druckunterschied zwischen dem Melkbecherinnenraum und der Zitzenzisterne aus der Zitze ermolken und abgeleitet.

Durch ein permanent aufgebrachtes Dauervakuum könnten sich jedoch vermehrt Flüssigkeiten im Zitzengewebe und speziell im Bereich der Zitzenkuppe ansammeln. Daher sollte der in diesem Bereich vorhandene Verschlussmechanismus der Zitze nicht über die Zeit, d. h. ständig offen gehalten werden. Aus diesem Grund wird im Stand der Technik ein Pulsator eingesetzt, dessen Aufgabe darin besteht, den Zwischenraum zwischen der Melkbecherhülse und dem Zitzengummi periodisch mit unterschiedlichen Drücken zu beaufschlagen, z.B. abwechselnd mit Vakuum und atmosphärischen Druck.

Durch die vorhandenen Druckunterschiede findet beim Belüften des Melkbecherzwischenraums ein Kollabieren des Zitzengummis im Innenraum der Melkbecherhülse statt, so dass sich das Zitzengummi an die Zitze anlegt und dort während der Entlastungsphase verbleibt. Beim anschließenden Evakuieren hebt das Zitzengummi wieder von der Zitze ab und gibt den Milchweg frei, der während der Entlastungsphase im Wesentlichen geschlossen war. Über den gesamten Melkablauf hinweg kommt es zu einem periodischen Öffnen und Schließen des Zitzengummis wobei bei geöffnetem Zitzengummi der Milchfluss aus der Zitze stattfindet. Durch das Anlegen des Zitzengummis auf die Zitze kommt es zu einer Massage der Zitzenkuppe und zu einer Entlastung des Gewebes. Die in der Zitze angestaute Gewebeflüssigkeit kann wieder oberen Bereichen und damit der Blutzirkulation zugeführt werden.

Zum effektiven Melken ist eine vorhergehende Stimulation der Zitzen sinnvoll bzw. nötig. Oft wird der Pulsator in der Anfangsphase des Melkens zur Stimulation der Zitze mit einer deutlich erhöhten Frequenz betrieben, z.B. bei Kühen mit etwa 300 Zyklen pro Minute, während in der Hauptmelkphase eine Frequenz von z.B. etwa 60 Zyklen pro Minute eingestellt wird. Teilweise wird auch mit unterschiedlichsten Pulsatoreinstellungen gearbeitet und dabei die zeitliche Vorgabe für die einzelnen Pulsationsphasen variiert.

Bei anderen Ausgestaltungen wird unter Zuhilfenahme von Überdruck die Druckdifferenz in der so genannten Entlastungsphase bei geschlossenem Zitzengummi noch weiter erhöht.

Bei einem weiteren Ansatz zur Stimulation der Zitzen wird versucht, über eine unterschiedliche Zitzengummigestaltung die Massage der Zitze positiv zu beeinflussen. In der Regel werden im Stand der Technik rotationssymmetrisch gestaltete Zitzengummis verwendet. Daneben sind auch Zitzengummis bekannt, deren Querschnitt in dem die Zitze umspannenden Bereich nicht rund ist, sondern oval oder mehreckig geformte Bereiche aufweist.

Aus der EP 1 239 725 B1 ist ein Melkbecher bekannt. Dieser Melkbecher weist ein Zitzengummi auf, das über verschiedene radiale Wände mit der Melkbecherhülse verbunden ist. Auf diese Weise umfasst der Pulsraum mehrere fingerartige Kammerabschnitte, die alle untereinander verbunden sind und insgesamt eine große Vakuumkammer bilden.

Bei den aus dem Stand der Technik bekannten Ausführungsformen des oben beschriebenen Zweiraummelkbecherprinzips ist die Kollabierungsrichtung des Zitzengummis im Prinzip immer gleich. Dies bedeutet, dass bei gleichartigem Ansetzen der gleichen Zitzenbecher an die gleichen Zitzen der zu melkenden Tiere, die Zitzen immer an den gleichen Stellen eine Druckbelastung erfahren. Das gilt insbesondere bei automatischen Melksystemen, bei denen robotergestützt die Melkbecher angelegt werden. Das automatische Ansetzen der Melkbecher kann bei diesen Systemen durch die relativ immer gleichartige Greif- und Ansetztechnik dazu führen, dass die Zitzenbecher immer gleich zu den jeweiligen Zitzen ausgerichtet sind. Dadurch ist ein Abflachen der Zitzen in Richtung der Druckbelastung bei automatischen Melksystemen beobachtet worden. Neuere Untersuchungen zeigen, dass die ansonsten sehr sensibel reagierenden Zitzen im letzen Drittel des Melkens auf keinerlei Art vor. Stimulation reagieren.

Auch die in der US 1,365,665 und in der FR 499 796 A gezeigten Melkbecher können dieser Problematik nicht entgegenwirken. In diesen Melkbechern ist der Pulsraum in mehrere über eine Ringnut miteinander verbundene Bereiche aufgeteilt. Diese Bereiche werden mittels einer gemeinsamen Versorgungsleitung über diese Ringnut gemeinsam angesteuert. Trotz der Aufteilung in mehrere Bereiche kommt es zur gleichzeitigen Pulsation des gesamten Pulsraumes und resultiert wieder in der oben beschriebenen monotonen Belastung der Zitze.

Aus der DE 198 40 732 A1, der FR 2 413 850 A und der US 2 612 136 sind Melkbecher bekannt, die über getrennte Pulsbereiche verfügen, die teilweise auch getrennt voneinander angesteuert werden können. Diese Melkbecher haben allerdings eine Aufteilung des Pulsraumes in axialer Richtung gemeinsam, wodurch auch diese Art von Zitzenbecher eine einseitige Druckbelastung der Zitze nicht verhindern kann.

Der vorliegenden Erfindung liegt daher die Aufgabe zugrunde, eine Melkvorrichtung zu Verfügung zu stellen, die eine verbesserte Massage der Zitzen der zu melkenden Tiere während des Melkvorgangs ermöglicht.

Dies wird erfindungsgemäß durch eine Vorrichtung zum Melken von Tieren nach Anspruch 1 erreicht. Die erfindungsgemäße Einrichtung ist Gegenstand von Anspruch 13. Das erfindungsgemäße Verfahren ist Gegenstand des Anspruchs 16. Vorteilhafte Ausführungsformen und Weiterbildungen sind Gegenstand der jeweiligen Unteransprüche.

Die erfindungsgemäße Vorrichtung zum Melken von Tieren nach Anspruch 1 weist ein Gehäuse auf, sowie ein wenigstes teilweise innerhalb dieses Gehäuses angeordnetes Absaugelement. In Wesentlichen in dem Gehäuse wird an dem Absaugelement ein Pulsraum und ein Zitzenraum gebildet. Es ist wenigstens eine dem Pulsraum zugeordnete Öffnung vorgesehen, um den Pulsraum mit einem Fluid zu beaufschlagen, d.h., um dem Pulsraum ein Fluid zu entziehen oder zuzuführen. Erfindungsgemäß ist der Pulsraum in wenigstens zwei durch wenigstens ein Trennmittel voneinander getrennte Pulskammern unterteilt. Dabei ist das Trennmittel im Wesentlichen in einer Längsrichtung des Gehäuses angeordnet.

Die erfindungsgemäße Einrichtung zum Melken von Tieren nach Anspruch 13 umfasst ein Absaugelement mit einer inneren Wandung und einer äußeren Wandung. An dem Absaugelement wird wenigstens ein Pulsraum und ein Zitzenraum gebildet. Es ist wenigstens eine dem Pulsraum zugeordnete Öffnung vorgesehen, um den Pulsraum mit einem Fluid zu beaufschlagen. Der Pulsraum ist durch wenigstens ein Trennmittel in wenigstens zwei voneinander im Wesentlichen getrennte Pulskammern unterteilt, wobei das Trennmittel im Wesentlichen in einer Längsrichtung des Gehäuses angeordnet ist.

Damit ist es möglich, dass die erfindungsgemäße Einrichtung an einem konventionellen Melkzeug eingesetzt wird, so dass eine Aufrüstung bestehender Anlagen mit der Erfindung ermöglicht wird. Da - im Gegensatz zu konventionellen Zitzengummis - das erfindungsgemäße Abmelkelement eine innere und eine äußere Wandung aufweist, kann der Pulsraum vollständig im Absaugelement gebildet und davon begrenzt werden.

Die erfindungsgemäße Vorrichtung kann ebenfalls in bestehenden Melkanlagen nachgerüstet werden, indem die Melkbecher inklusive Melkbecherhülse umgerüstet werden.

Die im Folgenden beschriebenen Weiterbildungen und Ausgestaltungen sind in der Regel sowohl bei der erfindungsgemäßen Vorrichtung als auch bei der erfindungsgemäßen Einrichtung einsetzbar, sofern sich aus dem Zusammenhang nichts Gegenteiliges ergibt.

Bei der Vorrichtung und bei der Einrichtung ist die Unterteilung in verschiedene Pulskammern bzw. Teilräume vorgesehen. Dadurch ist es möglich, die gebildeten Pulskammern in unterschiedlicher Weise mit einem Vakuum bzw. mit einem Fluid zu beaufschlagen. Auf diese Weise kann die Kollabierungsrichtung des Absaugelements bzw. des Zitzengummis z.B. fortlaufend geändert werden.

Damit können die Zitzen der Kühe durch umlaufend stattfindende oder auch abwechselnd stattfindende Massagen in einer günstigeren Melkkondition gehalten werden. Erfindungsgemäß ist eine über die Zeit variierende Massage der Zitze möglich. Im Stand der Technik ist es hingegen nicht möglich, die Massagerichtung auf die Zitze während des Melkvorgangs zu ändern. Mit der vorliegenden Erfindung ist eine wechselnde bzw. variierende Massage unterschiedlicher Bereiche der.Zitze während des Melkvorgangs möglich. Das bietet erhebliche Vorteile.

Mit der Erfindung kann einer Abplattung der Zitze vorgebeugt werden, die durch eine dauerhaft auf die gleichen Stellen der Zitze erfolgende mechanische Einwirkung hervorgerufen werden kann, da die Kollabierungsrichtung fortlaufend während des Melkens geändert werden kann. Bei dem Fluid kann es sich um ein Gas oder ein Flüssigkeit oder um ein Flüssigkeits-Gas-Gemisch handeln. Vorzugsweise wird ein Gas und insbesondere Luft eingesetzt. Diese Luft wird vorzugsweise wenigstens einem Pulsraum der Vorrichtung abwechselnd zugeführt und entzogen. Es ist aber auch möglich, ein Öl oder Wasser oder Druckluft oder sonst ein geeignetes Fluid einzusetzen.

Unter einem Absaugelement wird insbesondere das gesamte Zitzengummi verstanden. Das Zitzengummi kann einteilig inklusive kurzem Milchschlauch oder mehrteilig mit einem separaten kurzen Milchschlauch ausgeführt sein. Das Zitzengummi kann einen Aktivabschnitt umfassen, der zeitweise an der Zitze des zu melkenden Tieres anliegt, sowie einen kollabierenden Abschnitts, der mit diesem Aktivabschnitt übereinstimmen kann oder mit diesem beispielsweise über einen Zwischenabschnitt verbunden sein kann.

Der Pulsraum wird bzw. die jeweiligen Pulskammern werden über die zugeordnete Öffnung mit einem Fluid beaufschlagt, d.h., dass in der jeweiligen Pulskammer bzw. dem Pulsraum ein bestimmter Fluiddruck erzeugt wird, der zwischen einem unteren Druckniveau und einem maximalem Druckniveau schwankt, so dass der jeweiligen Pulskammer bzw. dem Pulsraum insbesondere periodisch ein Fluid entzogen und wieder zugeführt wird.

Bei einer bevorzugten Ausführungsform ist das Absaugelement so in dem Gehäuse angeordnet, dass der Pulsraum das Absaugelement in Umfangsrichtung desselben im Wesentlichen vollständig umgibt. Dies bedeutet, dass im Wesentlichen der vollständige Bereich in Umfangsrichtung um die Zitze evakuiert bzw. befüllt werden kann.

Der Zwischenraum bildet den Pulsraum, der im Unterschied zum Stand der Technik aus mehreren unabhängigen Teilräumen bzw. Pulskammern gebildet wird, die separat befüllt oder evakuiert werden können.

Vorzugsweise sind an und insbesondere in dem Gehäuse mehrere Öffnungen vorgesehen, die unterschiedlichen Teilräumen bzw. Pulskammern zugeordnet sind, d. h. mit denen den betreffenden Pulskammern das Fluid entzogen oder zugeführt werden kann. Auf diese Weise können die unterschiedlichen Pulskammern getrennt voneinander evakuiert bzw. mit Druck beaufschlagt werden.

Diese Beaufschlagung der einzelnen Teilräume bzw. Pulskammern ist dabei besonders bevorzugt unabhängig voneinander möglich, sodass während eines Melkzyklus oder Melkvorgangs zu unterschiedlichen Zeitpunkten aus unterschiedlichen Pulskammern das Fluid abgeführt werden kann.

Es ist jedoch auch möglich, nur eine Öffnung in dem Gehäuse vorzusehen und beispielsweise durch die Verwendung von Ventilen im Inneren des Gehäuses oder des Zitzengummis zu bewirken, dass zu unterschiedlichen Zeitpunkten unterschiedliche Pulskammern evakuiert werden. Bevorzugt ist auch eine Öffnung mit einem Anschlussstutzen nach außen und eine interne Verteilung über eine entsprechend angepasste Anzahl an Kanälen und Ventilen. Die Ventile können insbesondere elektrisch oder mechanisch gesteuert sein oder selbsttätig in einem vorbestimmten oder einstellbaren Rhythmus öffnen und schließen. Vorzugsweise sind die Öffnungen bezüglich des Gehäuses im Wesentlichen höhengleich angeordnet. Dies bedeutet, dass sämtliche Öffnungen vorzugsweise im Wesentlichen auf der gleichen Höhe in Längsrichtung des Gehäuses angeordnet sind. Auf diese Weise kann eine gleichmäßige Beaufschlagung des Gehäuses bzw. der Pulskammern mit Unterdruck erreicht werden.

Die Öffnungen sind vorzugsweise unterhalb des Aktivabschnitts angeordnet.

Bevorzugt sind die Öffnungen im Wesentlichen in Umfangsrichtung im Wesentlichen gleichmäßig in dem Gehäuse angeordnet. Auf diese Weise ist bezüglich der zu melkenden Zitze eine Druckbeaufschlagung bzw. eine Unterdruckbeaufschlagung der einzelnen Pulskammern in gleichmäßiger Weise möglich.

Vorzugsweise sind das Absaugelement und das Gehäuse im Wesentlichen koaxial zueinander angeordnet. Auf diese Weise kann erreicht werden, dass die radiale Breite des Pulsraums in Umfangsrichtung des Absaugelements im Wesentlichen konstant bleibt.

Erfindungsgemäß wird der Pulsraum durch wenigstens ein Trennmittel in die wenigstens zwei Pulskammern unterteilt. Dabei wird unter einem Trennmittel ein solches Mittel verstanden, welches eine im Wesentlichen fluid- oder gasdichte Abtrennung der beiden Teilräume zueinander erlaubt.

Vorteilhafterweise weist das Trennmittel eine zwischen dem Absaugelement und der Innenwandung des Gehäuses verlaufende im Wesentlichen fluiddichte Wandung auf. Diese Wandung verläuft im Wesentlichen in radialer Richtung von dem Absaugelement zur Innenwand des Gehäuses.

Das Trennmittel erstreckt sich vorzugsweise im Wesentlichen in einer Längsrichtung des Gehäuses, und besonders bevorzugt im Wesentlichen entlang der vollständigen Längsrichtung der Innenwandung des Gehäuses. Dadurch können die Pulskammern einerseits bezüglich einander getrennt werden und sich auf der anderen Seite im Wesentlichen entlang der vollständigen Längsrichtung des Gehäuses erstrecken, um auf diese Weise ein noch ausreichendes absaugbares Volumen zur Verfügung zu stellen.

Bei einer weiteren bevorzugten Ausführungsform sind mehrere Trennmittel vorgesehen, die im Wesentlichen gleichmäßig in Umfangsrichtung des Gehäuses verteilt sind. Auf diese Weise können im Wesentlichen gleich große Pulskammern bzw. Pulsräume mit jeweils gleich großen Volumen gebildet werden. Bevorzugt ist jedem dieser Pulskammern genau eine Öffnung in dem bzw. am Gehäuse zugeordnet. Auf diese Weise kann über eine Vielzahl von Öffnungen eine Vielzahl von Pulskammern unabhängig voneinander mit einem Vakuum bzw. mit Druck beaufschlagt werden.

Es kann auch für eine Mehrzahl von Pulskammern genau eine Öffnung oder ein Anschluss vorgesehen sein, z.B. für vier Teilräume zwei Öffnungen oder Stutzen. In einem solchen Fall können gegenüberliegende Pulskammern z.B. mittels einer Öffnung versorgt werden.

Das Absaugelement weist in einer weiteren bevorzugten Ausführungsform einen Querschnitt auf, der aus einer Gruppe von Querschnitten ausgewählt ist, welche kreisförmige Querschnitte, ellipsenförmige Querschnitte, mehreckige wie z.B. dreieckige, viereckige, fünfeckige, sechseckige, siebeneckige, achteckige oder polygonale Querschnitte und Kombinationen hieraus und dergleichen enthält.

Bei einer weiteren bevorzugten Ausführungsform ist eine Absaugeinrichtung vorgesehen, die ein separates Absaugen von Fluid über jede Öffnung ermöglicht. Dabei können beispielsweise über Ventile, die über eine Steuerungseinrichtung gesteuert werden, die einzelnen Öffnungen unabhängig voneinander mit einem Vakuum und/oder Atmosphäre beaufschlagt werden. Auf diese Weise ist während eines Melkzyklus ein unterschiedliches Beaufschlagen unterschiedlicher Pulskammern mit einem Fluid mit Unterdruck und/oder mit einem Fluid mit atmosphärischem Druck oder sogar Überdruck möglich.

Die Steuerungseinrichtung bewirkt besonders bevorzugt, dass das Fluid zu einem vorgegebenen Zeitpunkt durch zwei unterschiedliche Öffnungen unterschiedlich abgesaugt oder zugeführt wird. Dies bedeutet, dass beispielsweise durch eine Öffnung keine Absaugung bzw. Zufuhr von Fluid erfolgt, während durch eine andere Öffnung das Fluid abgesaugt bzw. zugeführt wird.

Es ist auch möglich, die Luft unterschiedlich schnell aus den einzelnen Pulskammern abzusaugen bzw. die Luft unterschiedlich schnell wieder hinein zu leiten. Dazu kann die Größe des jeweiligen Öffnungsquerschnitts der einzelnen Ventile einstellbar sein, oder es können einzelne Ventile getaktet gesteuert werden, um die Luft langsamer hinein zu lassen oder abzusaugen, in dem sie periodisch für sehr kurze Zeiträume wie z.B. 10, 20 oder 100 ms auf und zu geschaltet werden.

Durch die unterschiedliche bzw. unterschiedlich schnelle Beaufschlagung einzelner Teilräume mit Druck bzw. Unterdruck wird bewirkt, dass sich die Kollabierungsrichtung des Zitzengummis fortlaufend während des Melkens ändert.

Im Stand der Technik ist die Einfaltrichtung des Zitzengummis im Betrieb immer gleich. Bei der ersten Inbetriebnahme ist die erste Einfaltrichtung bei konventionellen Zitzengummi oft zufällig. Durch das Einfalten wird das Material lokal ein wenig geschwächt, so dass sich eine Vorzugsrichtung ergibt, in der das konventionelle Zitzengummi anschließend regelmäßig kollabiert.

Bei der vorliegenden Erfindung bewirkt die oben erwähnte Steuerungseinrichtung bevorzugt weiterhin, dass periodisch durch unterschiedliche Öffnungen Fluid abgesaugt bzw. zugeführt wird, und auf diese Weise periodisch unterschiedliche Pulskammern mit einem Fluid bzw. Vakuum beaufschlagt werden.

Bei einer bevorzugten Ausgestaltung sind zwei, drei oder mehr Pulskammern vorgesehen.

Bei einer besonders bevorzugten Ausführungsform wird der Zwischenraum bzw. Pulsraum durch vier Trennmittel in im Wesentlichen vier gleich große Teilräume bzw. Pulskammern unterteilt. Diese vier Pulskammern können im Wesentlichen gleichmäßig in Umfangsrichtung um die zu melkende Zitze verteilt sein. Bevorzugt bewirkt die Steuerungseinrichtung, dass zwei sich gegenüberstehende Pulskammern d. h. in Umfangsrichtung gegenüberliegende Pulskammern in im Wesentlichen gleicher Weise mit Fluid beaufschlagt werden.

Es ist beispielsweise möglich, dass zyklisch erst eine erste Pulskammer und eine zweite dieser ersten Pulskammer gegenüberstehende Pulskammer mit Vakuum bzw. atmosphärischen Druck beaufschlagt werden und anschließend eine benachbarte zu den ersten Pulskammern und eine dieser benachbarten Pulskammer gegenüberstehende Pulskammer mit Unterdruck bzw. Fluid atmosphärischen Drucks beaufschlagt wird.

Bevorzugt sind an der Innenwandung des Gehäuses Aufnahmevorrichtungen zur Aufnahme der fluid- und insbesondere gasdichten Wandungen vorgesehen. Die Wandungen sind bei dieser Ausführungsform vorzugsweise stoffschlüssig mit dem Absaugelement verbunden und ragen im Wesentlichen radial nach außen, um dort von den besagten Aufnahmevorrichtungen aufgenommen zu werden.

Die vorliegende Erfindung ist ferner auf ein Verfahren zum Melken von Tieren nach Anspruch 16 gerichtet, bei dem wenigstens zwei unterschiedliche und durch wenigstens ein Trennmittel voneinander getrennte Pulskammern eines Pulsraumes in einem Gehäuse einer Melkvorrichtung angeordneten zu einem vorgegebenen Zeitpunkt mit unterschiedlichen Fluiddrücken beaufschlagt werden. Dabei ist das Trennmittel im Wesentlichen in Längsrichtung eines Gehäuses angeordnet.

Bevorzugt werden die im Wesentlichen getrennten Teilräume mittels unterschiedlicher Öffnungen in dem Gehäuse mit unterschiedlichen Fluiddrücken beaufschlagt. Besonders bevorzugt werden im Wesentlichen in Umfangsrichtung des Gehäuses gegenüberliegende Pulskammern mit gleichartigen Fluiddrücken beaufschlagt.

Weitere Vorteile und Ausführungsformen ergeben sich aus dem Ausführungsbeispiel, das nun in Bezug auf die beigefügten Zeichnungen erläutert wird.

In den Figuren zeigen:
- Fig. 1: eine Querschnittsdarstellung einer erfindungsgemäßen Vorrichtung zum Melken von Tieren;
- Fig. 2: eine Draufsicht auf einen Schnitt einer Variante der Melkvorrichtung aus Fig. 1, welche etwa entlang der Linie A-A in Fig. 1 geschnitten ist;
- Fig. 3: die Darstellung aus Fig. 2 in einem ersten Betriebszustand;
- Fig. 4: die Darstellung aus Fig. 2 in einem zweiten Betriebszustand der Vorrichtung.

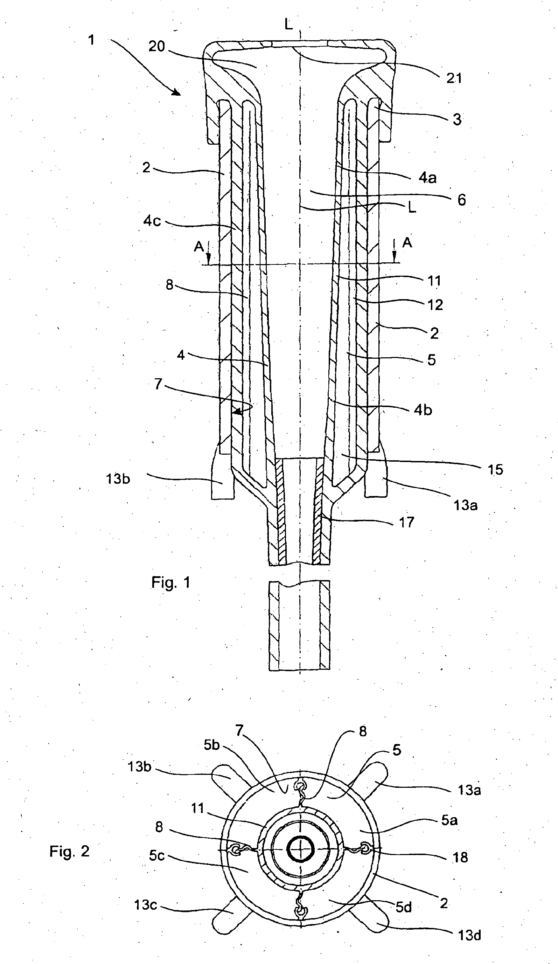

Fig. 1 zeigt eine Querschnittsdarstellung einer ersten erfindungsgemäßen Vorrichtung 1 zum Melken von Tieren. Diese als Melkbecher ausgeführte Vorrichtung weist ein Gehäuse in Form einer Melkbecherhülse 2 auf, in dem ein als Zitzengummi 4 ausgestaltetes Absaugelement angeordnet ist.

Das Zitzengummi 4 weist einen Kopfabschnitt 20 auf, über den mittels einer Öffnung 21 die Zitze eines zu melkenden Tieres eingeführt wird. Der Kopfabschnitt 20 ragt in Längsrichtung L des Gehäuses über dieses hinaus. Die Melkbecherhülse 2 besteht hier aus Metall und ist im Wesentlichen umlaufend um das Zitzengummi 4 ausgebildet. Die Melkbecherhülse 2 kann auch aus Kunststoff bestehen. Das Zitzengummi kann z. B. aus einem gum-mihaltigen Material oder aus Silikon bestehen.

In Umfangsrichtung um die Melkbecherhülse 2 sind hier im Ausführungsbeispiel vier Pulsstutzen vorgesehen, von denen in der Darstellung nach Fig. 1 zwei Pulsstutzen 13a und 13b sichtbar sind. Diese Pulsstutzen münden in (nicht gezeigte) Öffnungen in der Melkbecherhülse 2, um so eine Verbindung zu dem Pulsraum des Zitzengummis des Melkbechers herzustellen. Über die Pulsstutzen wird der Pulsraum 5 bzw. dessen Teilräume 5a, 5b, 5c und 5d des Zitzengummis 4 mit einem Fluid beaufschlagt. Die Pulsstutzen 13a, 13b, 13c und 13d,sowie der Pulsraum 5 mit seinen Pulskammern 5a, 5b, 5c und 5d bilden insgesamt die Absaugeinrichtung 15, der bzw. deren Teilen einzeln oder gemein-sam ein Fluid periodisch zu- und wieder abgeführt wird. Hier im Ausführungsbeispiel wird Luft als Fluid verwendet. Es kann aber auch ein anderes Gas oder ein sonstiges Fluid wie z.B. Wasser oder Öl verwendet werden.

Hier wird über die Pulsstutzen der Pulsraum bzw. es werden die jeweiligen Pulskammern mit Unterdruck beaufschlagt bzw. es wird dem Pulsraum bzw. den jeweiligen Pulskammern Fluid bzw. Luft ab- bzw. zugeführt. Das Zitzengummi 4 stützt sich über eine Ringnut 3 oben an der Melkbecherhülse 2 ab und ist unten an der Melkbecherhülse aufgenommen.

Das Zitzengummi bzw. Absaugelement 4 weist einen oberen Bereich 4a oder Aktivabschnitt 4a auf, der wenigstens zeitweise mit der Zitze des zu melkenden Tieres in Verbindung steht. Daneben ist ein unterer Abschnitt 4b des Zitzengummis vorgesehen. Zwischen der Melkbecherhülse 2 bzw. dessen Innenwandung 7 einerseits und dem Aktivabschnitt 4a sowie dem unteren Abschnitt 4b des Zitzengummis 4 andererseits wird der Zwischen- bzw. Pulsraum 5 gebildet. Der Pulsraum umfasst vier Pulskammern 5a, 5b, 5c und 5d, die unabhängig voneinander mit Luft gefüllt oder evakuiert werden können.

Genauer gesagt wird bei dieser Ausführungsform der Pulsraum 5 zwischen der inneren Wand 11 der Abschnitte 4a, 4b des Absaugelements und einer radial äußeren Wand 12 des Zitzengummis 4 gebildet. Dieser Pulsraum 5 kann über die oben erwähnten Öffnungen und die Pulsstutzen 13a, 13b, 13c und 13d evakuiert bzw. belüftet werden.

Das Zitzengummi 4 weist im Ausführungsbeispiel nach Fig. 1 eine radial innere Wandung 11 und eine radial äußere Wandung 12 auf, die den Puls- bzw. Zwischenraum 5 zwischen sich begrenzen. Der gesamte Pulsraum 5 wird hier über vier im wesentlichen radiale Wandungen 8 in die vier Teilräume bzw. Pulskammern 5a, 5b, 5c und 5d unterteilt, die untereinander gasdicht sind und hier im wesentlichen gleich groß sind.

Das Bezugszeichen 17 bezieht sich auf eine Absaugleitung bzw. einen Melkbechereinsatz, um die abgemolkene Milch abzusaugen und weiter zu transportieren.

Fig. 2 zeigt eine Draufsicht auf eine Variante der erfindungs-gemäßen Vorrichtung zum Melken von Tieren. Gleiche Teile oder ähnliche Komponenten sind mit den gleichen Bezugszeichen bezeichnet. Man erkennt, dass der Aktivabschnitt 4a des Zitzengummis 4 und die Melkbecherhülse 2 der Vorrichtung im Wesentlichen koaxial zueinander angeordnet sind.

Im Gegensatz zu der in Fig. 1 gezeigten Ausführungsform ist hier keine äußere Wand 12 des Zitzengummis vorgesehen, sondern der Pulsraum 5 bzw. die einzelnen jeweils voneinander getrennten Pulskammern 5a, 5b, 5c und 5d werden direkt zwischen der Innenwand 7 der Melkbecherhülse 2 und der radial inneren Wand 11 des Zitzengummis 4 gebildet.

Bei der hier gezeigten Ausführungsform sind insgesamt vier gasdichte Wandungen 8 vorgesehen, die sich entlang der Längsrichtung des Zitzengummis 4 erstrecken. Die im Wesentlichen gasdichten Wandungen erstrecken sich ausgehend von dem Aktivabschnitt 4a bzw. dem unteren Abschnitt 4b des Zitzengummis im Wesentlichen radial nach außen und greifen in Aufnahmeeinrichrichtungen 18, die in Verbindung mit der Melkbecherhülse 2 stehen, ein.

Wie in Fig. 2 zu erkennen, sind die gasdichten Wandungen 8 in Ausgangszustand nicht vollständig gespannt, sondern können, wie durch die Krümmung angedeutet ist, noch um einen bestimmten Bereich gedehnt werden. Durch die vier gasdichten Wandun-gen 8 wird der Pulsraum 5 in insgesamt vier vollständig separate Pulskammern 5a, 5b, 5c und 5d unterteilt, wobei sich je zwei Pulskammern 5a bzw. 5b und zwei Pulskammern 5b bzw. 5d gegenüber stehen.

Alle Pulskammern sind hier im Wesentlichen gasdicht voneinander getrennt, so dass ein erster Teilraum unter Vakuum gebracht werden kann, während gleichzeitig ein zweiter benachbarter Teilraum mit Luft von atmosphärischem Druck gefüllt ist. Die Abdichtung der Teilräume bzw. Pulskammern ist untereinander wenigstens so gut, dass über der Länge einer Phase eines Pulszyklus kein Druckausgleich zwischen den beiden Pulskammern erfolgt.

Durch die gleichmäßige Anordnung der gasdichten Wandungen 8 sind die vier Pulskammern 5a, 5b, 5c bzw. 5d im Wesentlichen gleich groß.

Jedem der Pulskammern 5a, 5b, 5c und 5d ist hier eine (nicht gezeigte) Öffnung sowie ein Pulsstutzen 13a, 13b, 13c und 13d zugeordnet. Damit können über die vier Pulsstutzen 13a bis 13d die vier Pulskammern 5a bis 5d jeweils getrennt voneinander belüftet und evakuiert werden.

Es ist z.B. auch möglich, nur zwei Pulsstutzen vorzusehen, wobei ein Pulsstutzen mit den beiden Pulskammern 5a und 5c und der andere Pulsstutzen mit den beiden Pulskammern 5b und 5d in Verbindung steht. Auch könnte, wie eingangs erwähnt, nur ein Pulsstutzen vorgesehen sein und die Belüftung bzw. Evakuierung der einzelnen Pulskammern 5a bis 5d über eine geeignete Steuerung der Ventile im Inneren der Melkvorrichtung gesteuert werden.

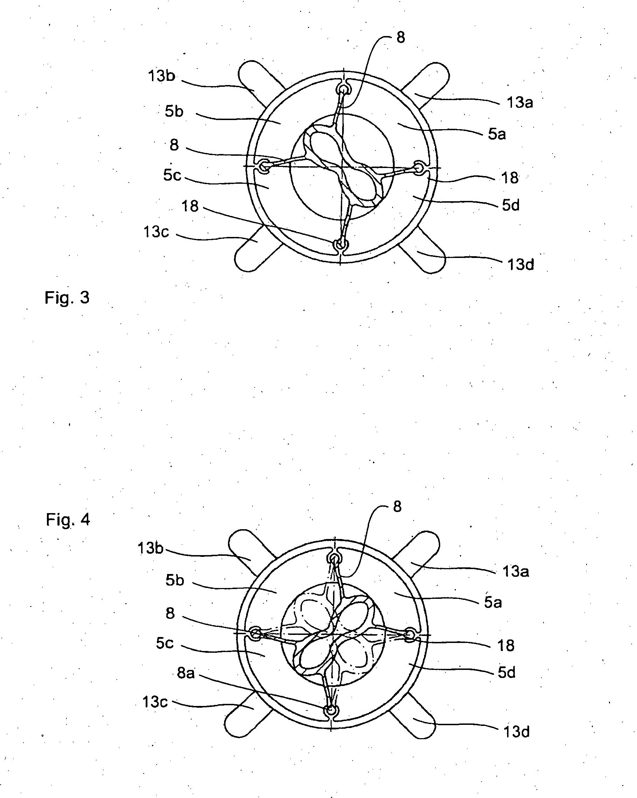

Fig. 3 zeigt einen Querschnitt aus Fig. 2 in einem ersten Betriebszustand. Hier wurde über die Pulsstutzen 13b und 13d Luft angesaugt und damit Luft aus den Pulskammern 5b und 5d abgesaugt, während die Pulskammern 5a und 5c über die Pulsstutzen 13a und 13c belüftet sind. Somit herrscht in den Pulskammern 5a und 5c atmosphärischer Druck, während im Zitzenraum 6 das Betriebsvakuum anliegt. Dies bewirkt, dass sich der Querschnitt des Zitzengummis 4 wie in Fig. 3 gezeigt verformt. Das Zitzengummi faltet durch den Überdruck in den Pulskammern 5a und 5c ein. Die Pulskammern 5a und 5c vergrößern sich, während die Volumina der Pulskammern 5b und 5d sich verkleinern. Bei der hier gezeigten Position werden die gasdichten Wandun-gen 8 gespannt.

Fig. 4 zeigt einen Querschnitt aus Fig. 2 in einem zweiten Betriebszüstand. Der zweite Betriebszustand ist durch die durchgezogenen Linien gekennzeichnet. Durch die gestrichelten Linien wird der erste Betriebszustand nach Fig. 3 gezeigt. Wäh-rend in dem ersten Betriebszustand nach Fig. 3 die sich gegenüberliegenden Pulskammern 5a und 5c belüftet wurden, so werden im zweiten Betriebszustand die sich ebenfalls gegenüberliegen-den Pulskammern 5b und 5d belüftet, die in der Querschnittsebene um 90° gegenüber den anderen beiden Pulskammern gedreht angeordnet sind. Das Zitzengummi 2 ist in der Darstellung nach Fig. 4 ebenfalls eingefaltet, allerdings ist die Einfaltrichtung senkrecht zur Einfaltrichtung nach der Darstellung nach Fig. 3.

Durch abwechselndes Beaufschlagen der Pulsstutzen 13a und 13c einerseits und der Pulsstutzen 13b und 13d andererseits bzw. durch abwechselndes Absaugen von Luft können die beiden in Fig. 3 und Fig. 4 gezeigten Extremzustände hervorgerufen wer-den. Auf diese Weise ändert sich der Querschnitt des Zitzengummis laufend und die Zitze des zu melkenden Tieres kann über die Zeit hinweg von unterschiedlichen Richtungen her massiert werden. Dazwischen wird jeweils in der Melkphase jedes Pulszyklus der Milchweg freigegeben, indem alle Pulskammern evakuiert werden, so dass sich der in den Fig. 1 und 2 dargestellte Zustand ergibt.

Anstelle der in Fig. 4 gezeigten vier Räume 5a, 5b und 5c, 5d können auch mehrere Pulskammern bevorzugt jeweils mit diesen zugeordneten Öffnungen und Pulsstutzen vorgesehen sein. So könnten beispielsweise insgesamt drei oder fünf oder sechs oder mehr Pulskammern vorgesehen sein. Die Anzahl der belüfteten und nicht belüfteten Pulskammern kann unterschiedlich sein und auch über dem Melkverlauf variieren.

Bei sechs Pulskammern können während der Ruhephase des Pulszyklus z.B. jeweils drei nicht benachbarte Pulskammern zu einem vorgegebenen Zeitpunkt mit einem Vakuum beaufschlagt werden und die drei übrigen Pulskammern zu dem selben vorgegebenen Zeitpunkt unter atmosphärischen Druck belassen werden. Es können aber auch fünf (oder vier) Pulskammern belüftet werden, während ein Teilraum (oder zwei Pulskammern) unter Betriebsvakuum bleibt. Der eine unter Vakuum stehende Teilraum kann fortlaufend um die Zitze herum variieren oder bei jedem Takt erneut zufällig ausgewählt werden, um die Kollabierungsrichtung des Zitzengummis zu beeinflussen.

Auch wäre es möglich, insgesamt nur drei Pulskammern vorzusehen und zwei davon jeweils unterschiedlich zu dem dritten mit unterschiedlichen Luftdrücken zu beaufschlagen. Auch könnten bei der Anordnung einer Vielzahl von Pulskammern die einzelnen Pulsstutzen nach dem Zufallsprinzip jeweils mit Unterdruck beaufschlagt werden um auf diese Weise eine entsprechend in der Zeit zufällige Verformung des Zitzengummis zu erreichen.

Auch könnten zu einigen Zeitpunkten während des Melkvorgangs die einzelnen Pulskammern gleichartig mit Vakuum beaufschlagt werden und zu anderen Zeiträumen unterschiedlich. Daneben könnte bei der in Fig. 4 gezeigten Ausführungsform nur ein Pulsstutzen mit einem Unterdruck belastet werden, anschließend ein benachbarter und dieser Vorgang fortgesetzt werden. Auf diese Weise könnte eine umlaufende Massage der Zitze vorgenommen werden.

Wie sich aus Fig. 4 ergibt, sind die gasdichten Wände 8 derart im Bereich des Pulsraums 5 eingespannt, dass sich in diesem Falle vier voneinander getrennte Kammern ergeben. Diese Kammern werden fortlaufend unregelmäßig durch einen Pulsator mit Vakuum und atmosphärischen Druck (oder auch Überdruck) beaufschlagt. Dabei werden, wie oben gesagt generell nicht alle Kammern sondern im Falle von drei Kammer lediglich zwei Kammern und im Falle der gezeigten vier Kammern lediglich zwei sich gegenüber liegende Kammern angesteuert.

Bei mehr als vier Kammern werden vorzugsweise, wie oben erwähnt, die jeweils sich gegenüberliegenden Kammern angesteuert, wodurch es zu einem gezielten Kollabieren des Zitzengummis kommt. Durch das einstellbare stetige Wechseln der zur beaufschlagenden Kammern wird die Kollabierungsrichtung und damit die Massagerichtung auf der Zitze sich ständig verändern.

Durch die vorliegende Erfindung wird, wie oben erwähnt, eine besser abwechselnde Massagerichtung der Zitzenkuppe erreicht. Daneben wird das Risiko platter Zitzenkuppen beim Melken reduziert und auch insgesamt die mechanische Einwirkung auf die Zitze reduziert. Auf diese Weise kann insgesamt die Eutergesundheit gesteigert und eine bessere Zitzenkonditionierung erreicht werden. Auch sind durch die genannte bessere Zitzenkondition höhere Milchflüssintensitäten während des Melkablaufs möglich. Durch die erfindungsgemäße Vorrichtung kann weiterhin die Sensibilität der Zitzenkuppe über den gesamten Melkvorgang hinweg beibehalten werden und auf diese Weise eine günstigere Grundlage für melkbegleitende Stimulationssysteme geschaffen werden.

### Bezugszeichenliste

- 1: Melkvorrichtung
- 2: Melkbecherhülse
- 3: Ringnut
- 4: Zitzengummi
- 4a: Aktivabschnitt des Zitzengummis
- 4b: unterer Abschnitt des Zitzengummis
- 5: Pulsraum
- 5a, 5b, 5c, 5d: Pulskammern
- 6: Zitzenraum
- 7: Innenwandung der Melkbecherhülse 2
- 8: gasdichte Wandung
- 11: radial innere Wand des Zitzengummis
- 12: radial äußere Wand des Zitzengummis
- 13a, 13b, 13c, 13d: Pulsstutzen
- 15: Absaugeinrichtung
- 17: Melkbechereinsatz
- 18: Aufnahmeeinrichtung
- 20: Kopfabschnitt
- 21: Öffnung
- L: Längsrichtung

## Patentansprüche

1. Vorrichtung zum Melken von Tieren mit einem Gehäuse (2) und einem wenigstens teilweise innerhalb des Gehäuses (2) angeordneten Absaugelement (4), wobei in dem Gehäuse (2) an dem Absaugelement (4) ein Pulsraum (5) und ein Zitzenraum (6) gebildet wird und wobei wenigstens eine dem Pulsraum zugeordnete Öffnung vorgesehen ist, um den Pulsraum mit einem Fluid zu beaufschlagen,
**dadurch gekennzeichnet,**
**dass** der Pulsraum (5) durch wenigstens ein Trennmittel (8) in wenigstens zwei voneinander getrennte und getrennt mit einem Fluid beaufschlagbare Pulskammern (5a, 5b, 5c, 5d) unterteilt ist, wobei das Trennmittel (8) im Wesentlichen in einer Längsrichtung des Gehäuses (2) angeordnet ist.

2. Vorrichtung nach Anspruch 1, **dadurch gekennzeichnet,**
**dass** der Pulsraum (5) den Zitzenraum (6) in Umfangsrichtung im Wesentlichen vollständig umgibt.

3. Vorrichtung nach Anspruch 1 oder 2, **dadurch gekennzeichnet, dass** mehrere Öffnungen vorgesehen sind, die unterschiedlichen Pulskammern (5a, 5b, 5c, 5d) zugeordnet sind, wobei die Öffnungen insbesondere in Umfangsrichtung im Wesentlichen gleichmäßig in dem Gehäuse (2) angeordnet sind.

4. Vorrichtung nach wenigstens einem der vorangegangenen Ansprüche, **dadurch gekennzeichnet, dass** sich das Trennmittel (8) im Wesentlichen entlang der vollständigen Längsrichtung einer Innenwandung (7) des Gehäuses (2) erstreckt.

5. Vorrichtung nach Anspruch 4, **dadurch gekennzeichnet, dass** wenigstens ein Trennmittel (8) eine zwischen dem Absaugelement (4) und der Innenwandung (7) des Gehäuses (2) verlaufende gasdichte Wandung (8) ist.

6. Vorrichtung nach wenigstens einem der vorangegangenen Ansprüche, **dadurch gekennzeichnet, dass** eine Absaugeinrichtung vorgesehen ist, die ein separates Absaugen von Luft über jede Öffnung ermöglicht.

7. Vorrichtung nach wenigstens einem der vorangegangenen Ansprüche, **dadurch gekennzeichnet, dass** wenigstens drei oder vier Trennmittel (8) vorgesehen sind, die den Zwischenraum in wenigstens drei oder vier im Wesentlichen gleich große Pulskammern (5a, 5b, 5c, 5d) unterteilen.

8. Vorrichtung nach wenigstens einem der vorangegangenen Ansprüche, **dadurch gekennzeichnet, dass** eine Steuerungseinrichtung vorgesehen ist, die bewirkt, dass die Luft zu einem vorgegebenen Zeitpunkt wenigstens durch zwei unterschiedlichen Öffnungen unterschiedlich abgesaugt oder zugeführt wird.

9. Vorrichtung nach dem vorangegangenen Anspruch, **dadurch gekennzeichnet, dass** die Steuerungseinrichtung bewirkt, dass zwei sich gegenüberstehende Pulskammern in im Wesentlichen gleicher Weise mit Luft beaufschlagt werden.

10. Vorrichtung nach wenigstens einem der vorangegangenen Ansprüche, **dadurch gekennzeichnet, dass** an der Innenwandung (7) des Gehäuses (2) Aufnahmevorrichtungen (18) zur Aufnahme der gasdichten Wandungen (8) vorgesehen sind.

11. Vorrichtung nach wenigstens einem der vorangegangenen Ansprüche, **dadurch gekennzeichnet, dass** genau eine Öffnung (13a, 13b, 13c, 13d) für wenigstens zwei Pulskammern (5a, 5b, 5c, 5d) vorgesehen ist.

12. Vorrichtung nach wenigstens einem der vorangegangenen Ansprüche, **dadurch gekennzeichnet, dass** wenigstens eine Pulskammer eine insbesondere steuerbare Ventileinrichtung aufweist.

13. Einrichtung zum Melken von Tieren
mit einem Absaugelement (4) mit einer inneren Wandung (11) und einer äußeren Wandung (12), wobei an dem Absaugelement (4) ein Pulsraum (5) und ein Zitzenraum (6) gebildet wird, und wobei wenigstens eine dem Pulsraum zugeordnete Öffnung vorgesehen ist, um den Fulsraum mit einem Fluid zu beaufschlagen, und wobei der Pulsraum (5) durch wenigstens ein Trennmittel (8) in wenigstens zwei voneinander getrennte und getrennt mit einem Fluid beaufschlagbare Pulskammern (5a, 5b, 5c, 5d) unterteilt ist, wobei das Trennmittel (8) im Wesentlichen in einer Längsrichtung eines Gehäuses (2) einer Melkvorrichtung (1) angeordnet ist.

14. Einrichtung nach dem vorhergehenden Anspruch, **dadurch gekennzeichnet, dass** der Pulsraum zwischen der inneren Wandung (11) und der äußeren Wandung (12) gebildet wird und insbesondere durch im Wesentlichen radiale Trennmittel (8) in die Pulskammern (5a, 5b, 5c, 5d) unterteilt wird.

15. Einrichtung nach mindestens einem der vorhergehenden Ansprüche 13 bis 14, **dadurch gekennzeichnet, dass** wenigstens ein insbesondere steuerbares Ventil zwischen wenigstens zwei Pulskammern (5a, 5b, 5c, 5d) vorgesehen ist.

16. Verfahren zum Melken von Tieren, **dadurch gekennzeichnet, dass** wenigstens zwei unterschiedliche durch wenigstens ein im Wesentlichen in einer Längsrichtung eines Gehäuses (2) einer Melkvorrichtung (1) angeordnetes Trennmittel (8) voneinander getrennte und getrennt mit einem Fluid beaufschlagbare Pulskammern (5a, 5b, 5c, 5d) eines in dem Gehäuse (2) an einem Absaugelement (4) gebildeten Pulsraums (5) zu einem vorgegebenen Zeitpunkt mit unterschiedlichen Fluiddrücken beaufschlagt werden.

17. Verfahren nach Anspruch 16, **dadurch gekennzeichnet,**
**dass** die getrennten Pulskammern (5a, 5b, 5c, 5d) mittels unterschiedlicher Öffnungen in dem Gehäuse (2) mit unterschiedlichen Gasdrücken beaufschlagt werden, wobei vorzugsweise sich in Wesentlichen in Umfangsrichtung des Gehäuses gegenüberliegende Pulskammern (5a, 5b, 5c, 5d) mit gleichartigen Gasdrücken beaufschlagt werden.

## Claims

1. An apparatus for milking animals having a housing (2) and a suction element (4) arranged inside the housing (2) at least in part wherein a pulsation chamber (5) and a teat chamber (6) are formed in the housing (2) at the suction element (4) and wherein at least one opening assigned to the pulsation chamber is provided for applying a fluid to the pulsation chamber, **characterized in that** the pulsation chamber (5) is subdivided by at least one separator (8) into at least two pulsation compartments (5a, 5b, 5c, 5d) which are separate from one another and on which fluid can be applied separately wherein the separator (8) is substantially arranged in a longitudinal direction of the housing (2).

2. The apparatus according to claim 1, **characterized in that** the pulsation chamber (5) substantially entirely surrounds the teat chamber (6) in the peripheral direction.

3. The apparatus according to claim 1 or 2, **characterized in that** multiple openings are provided which are assigned to different pulsation compartments (5a, 5b, 5c, 5d), wherein the openings are arranged substantially evenly in the housing (2) in particular in the peripheral direction.

4. The apparatus according to at least one of the preceding claims, **characterized in that** the separator (8) substantially extends along the entire longitudinal direction of an inner wall (7) of the housing (2).

5. The apparatus according to claim 4, **characterized in that** at least one separator (8) is a gas-tight wall (8) extending between the suction element (4) and the inner wall (7) of the housing (2).

6. The apparatus according to at least one of the preceding claims, **characterized in that** a suction device is provided which allows sucking off air separately through each opening.

7. The apparatus according to at least one of the preceding claims, **characterized in that** at least three or four separators (8) are provided which subdivide the gap into at least three or four pulsation compartments (5a, 5b, 5c, 5d) having substantially the same size.

8. The apparatus according to at least one of the preceding claims, **characterized in that** a control device is provided which causes the air to be sucked off or fed differently at least through two different openings at a predetermined time.

9. The apparatus according to the preceding claim, **characterized in that** the control device causes air to be applied to two opposite pulsation compartments in substantially the same way.

10. The apparatus according to at least one of the preceding claims, **characterized in that** receiving apparatuses (18) for receiving the gas-tight walls (8) are provided on the inner wall (7) of the housing (2).

11. The apparatus according to at least one of the preceding claims, **characterized in that** precisely one opening (13a, 13b, 13c, 13d) is provided for at least two pulsation compartments (5a, 5b, 5c, 5d).

12. The apparatus according to at least one of the preceding claims, **characterized in that** at least one pulsation compartment comprises an in particular controllable valve device.

13. A device for milking animals having a suction element (4) with an inner wall (11) and an outer wall (12), wherein a pulsation chamber (5) and a teat chamber (6) are formed at the suction element (4), and wherein at least one opening assigned to the pulsation chamber is provided for applying a fluid to the pulsation chamber, and wherein the pulsation chamber (5) is subdivided by at least one separator (8) into at least two pulsation compartments (5a, 5b, 5c, 5d) which are separate from one another and on which a fluid can be applied separately wherein the separator (8) is substantially arranged in a longitudinal direction of a housing (2) of a milking apparatus (1).

14. The device according to the preceding claim, **characterized in that** the pulsation chamber is formed between the inner wall (11) and the outer wall (12) and is in particular subdivided into the pulsation compartments (5a, 5b, 5c, 5d) by means of substantially radial separators (8).

15. The device according to at least one of the preceding claims 13 to 14, **characterized in that** at least one in particular controllable valve is provided between at least two pulsation compartments (5a, 5b, 5c, 5d).

16. A method for milking animals, **characterized in that** different fluid pressures are applied at a predetermined time on at least two different pulsation compartments (5a, 5b, 5c, 5d) which are separate from one another, and on which a fluid can be applied separately, by means of at least one separator (8) arranged substantially in a longitudinal direction of a housing (2) of a milking apparatus (1) of a pulsation chamber (5) formed in the housing (2) on a suction element (4).

17. The method according to claim 16, **characterized in that** different gas pressures are applied to the separate pulsation compartments (5a, 5b, 5c, 5d) by means of different openings in the housing (2), wherein preferably similar gas pressures are applied on pulsation compartments (5a, 5b, 5c, 5d) substantially opposite one another in the peripheral direction of the housing.

## Revendications

1. Dispositif pour traire des animaux comprenant un boîtier (2) et un élément d'aspiration (4) agencé au moins en partie à l'intérieur du boîtier (2), un espace de pulsation (5) et un espace pour trayon (6) étant formés dans le boîtier (2) sur l'élément d'aspiration (4) et au moins une ouverture agencée dans l'espace de pulsation est prévue pour alimenter l'espace de pulsation avec un fluide,
**caractérisé en ce**
**que** l'espace de pulsation (5) est divisé par au moins un moyen de séparation (8) en au moins deux chambres de pulsation (5a, 5b, 5c, 5d) séparées l'une de l'autre et pouvant être alimentées séparément par un fluide, le moyen de séparation (8) étant agencé sensiblement dans une direction longitudinale du boîtier (2).

2. Dispositif selon la revendication 1, **caractérisé en ce que** l'espace de pulsation (5) entoure sensiblement complétement l'espace pour trayon (6) dans une direction circonférentielle.

3. Dispositif selon la revendication 1 ou 2, **caractérisé en ce qu'**il est prévu plusieurs ouvertures affectées à des chambres de pulsation (5a, 5b, 5c, 5d) différentes, et agencées en particulier dans une direction circonférentielle de façon sensiblement régulière dans le boîtier (2).

4. Dispositif selon au moins l'une des revendications précédentes, **caractérisé en ce que** le moyen de séparation (8) s'étend sensiblement le long de toute la direction longitudinale d'une paroi intérieure (7) du boîtier (2).

5. Dispositif selon la revendication 4, **caractérisé en ce qu'**au moins un moyen de séparation (8) est une paroi étanche au gaz s'étendant entre l'élément d'aspiration (4) et la paroi intérieure (7) du boîtier (2).

6. Dispositif selon au moins l'une des revendications précédentes, **caractérisé en ce qu'**il est prévu un appareil d'aspiration qui permet une aspiration séparée de l'air à travers chaque ouverture.

7. Dispositif selon au moins l'une des revendications précédentes, **caractérisé en ce qu'**il est prévu au moins trois ou quatre moyens de séparation (8) qui divisent l'espace intermédiaire en au moins trois ou quatre chambres de pulsation (5a, 5b, 5c, 5d) de taille sensiblement égale.

8. Dispositif selon au moins l'une des revendications précédentes, **caractérisé en ce qu'**il est prévu un appareil de commande, qui à un moment prédéterminé provoque l'aspiration ou l'alimentation différente de l'air par au moins deux ouvertures différentes.

9. Dispositif selon la revendication précédente, **caractérisé en ce que** l'appareil de commande provoque l'alimentation en air de deux chambres de pulsation opposées sensiblement de la même manière.

10. Dispositif selon au moins l'une des revendications précédentes, **caractérisé en ce que** des dispositifs de logement (18) sont prévus sur la paroi intérieure (7) du boîtier (2) pour recevoir les parois (8) étanches aux gaz.

11. Dispositif selon au moins l'une des revendications précédentes, **caractérisé en ce qu'**il est prévu exactement une ouverture (13a, 13b, 13c, 13d) pour au moins deux chambres de pulsation (5a, 5b, 5c, 5d).

12. Dispositif selon au moins l'une des revendications précédentes, **caractérisé en ce qu'**au moins une chambre de pulsation présente en particulier un dispositif de vanne pilotable.

13. Installation pour traire des animaux
comprenant un élément d'aspiration (4) comprenant une paroi intérieure (11) et une paroi extérieure, un espace de pulsation (5) et un espace pour trayon (6) étant constitués sur l'élément d'aspiration (4), et il est prévu au moins une ouverture associée à l'espace de pulsation pour alimenter l'espace de pulsation avec un fluide, et l'espace de pulsation (5) est divisé par au moins un moyen de séparation (8) en au moins deux chambres de pulsation (5a, 5b, 5c, 5d) séparées l'une de l'autre et pouvant être alimentées séparément par un fluide, le moyen de séparation (8) étant agencé sensiblement dans une direction longitudinale d'un boîtier (2) d'un dispositif de traite (1).

14. Installation selon la revendication précédente, **caractérisé en ce que** l'espace de pulsation est formé entre la paroi intérieure (11) et la paroi extérieure (12) et en particulier est divisé en les chambres de pulsation (5a, 5b, 5c, 5d) par des moyens de séparation sensiblement radiaux.

15. Installation selon au moins l'une des revendications précédentes 13 à 14, **caractérisé en ce qu'**au moins une vanne en particulier pilotable est prévue entre au moins deux chambres de pulsation (5a, 5b, 5c, 5d).

16. Procédé pour traire des animaux, **caractérisé en ce qu'**au moins deux chambres de pulsation (5a, 5b, 5c, 5d), d'un espace de pulsation (5) formé sur un élément d'aspiration (4) dans un boîtier (2) d'un dispositif de traite (1), distinctes et séparées l'une de l'autre par au moins un moyen de séparation (8) agencé sensiblement dans une direction longitudinale du boîtier (2), peuvent être alimentées séparément par un fluide, et sont à un instant prédéterminé alimentées sous des pressions de fluide différentes.

17. Procédé selon la revendication 16, **caractérisé en ce que** les chambres de pulsation (5a, 5b, 5c, 5d) séparées sont alimentées par différentes ouvertures dans le boîtier (2) à différentes pressions de gaz, des chambres de pulsation (5a, 5b, 5c, 5d) sensiblement opposées dans la direction circonférentielle du boîtier étant alimentées de préférence avec le même type de pressions de gaz.
